# EUROPEAN PATENT APPLICATION

(11) **EP 3 118 657 A1**
(43) Date of publication of application: **18.01.2017**
(21) Application number: 14885792.3
(22) Date of filing: 05.11.2014
(51) Int. Cl.: G01W 1/08

(54) **RADIOSONDE RECEIVER DEVICE FOR MULTI-CHANNEL UPPER-ATMOSPHERE OBSERVATION**

(30) Priority: 11.03.2014 KR 20140028647
(71) Applicant: Jinyang Industrial Co. Ltd., Anseong-si, Gyeonggi-do 456-912 (KR)
(72) Inventor: YANG, Seung Gu, Uiwang-si Gyeonggi-do 437-813 (KR); KWON, Soon Sik, Anseong-si Gyeonggi-do 456-912 (KR)
(74) Representative: Garavelli, Paolo
(86) International application number: PCT/KR2014/010577
(87) International publication number: WO 2015/137590

(57) **Abstract**

The present invention relates to a radiosonde receiver device for multi-channel upper-atmosphere observation and, more specifically, to a radiosonde receiver device for multi-channel upper-atmosphere observation comprising: a multi-channel radiosonde receiver for receiving meteorological data, which is obtained by observing the meteorological conditions of temperature, air pressure and humidity in the upper atmosphere, from a radiosonde which performs wireless transmission in a time-division manner, and for digitally sampling and outputting a meteorological aid frequency including the meteorological data in full ranges (400.0-406 MHz, BW = 6 MHz); a personal computer (PC) which receives a digital signal, which has been digitally sampled, from the multi-channel radiosonde receiver and restores the meteorological data through the analysis of the digital signal; and a USB & Ethernet interface which performs processing enabling signal transmission and reception according to a communication protocol between the multi-channel radiosonde receiver and the PC. By configuring a multi-channel radiosonde receiver with a two-channel or three-channel SDR receiver corresponding to the radiosonde which performs wireless transmission in a time-division manner, the radiosonde receiver device for multi-channel upper-atmosphere observation according to the present invention allows the meteorological conditions of the upper atmosphere to be simultaneously observed from a plurality of radiosondes without any restrictions due to interference. Further, the present invention can prevent observation from being interrupted by interference during the observation of the upper atmosphere, thereby allowing precise weather observation even under severe weather conditions, allowing the simultaneous operation of three radiosondes, and allowing a change in severe weather such as typhoons to be observed at short intervals in the case of performing radiosonde observation at 30-minute intervals, so that atmospheric conditions can be analyzed more precisely. Moreover, the present invention allows simultaneous monitoring of a plurality of channels of the multi-channel radiosonde receiver, thereby preventing a measurement failure due to interference even when interference occurs during observation.

## Description

### Technical Field

The present invention relates to a radiosonde receiver device for a multi-channel upper-atmosphere observation, and in particular to a radiosonde receiver device for a multi-channel upper-atmosphere observation wherein a weather data can be received through a time division wireless transmission from a radiosonde where an upper-atmosphere temperature, an atmospheric pressure and humidity are measured, and the received weather data are processed, by which any observation interruption due to a radio interference can be prevented.

### Background Art

The atmosphere covering the surface of the earth has an effect on human life. The radiosonde among a number of observation devices used to measure the structure and any change in the atmosphere is configured to measure an atmosphere state in such a way that an observation device equipped with temperature, atmospheric pressure, humidity and GPS sensors is tied to a balloon and is flew into the midair, and an observation data transmitted at a predetermined time interval from the observation device is received.

The radiosonde may directly measure temperature, atmospheric pressure, humidity, etc. while flying in the midair and may recognize and calculate a distance that the balloon has flown by wing for a predetermined time. The position of the radiosonde can be measured by the Long Range Navigation (Loran) method, and the Global Positioning System (GPS).

The method for measuring the position thereof in such a way to directly contact with an upper-atmosphere environment may advantageously have a higher accuracy as compared to the remote observation equipment which is able to recognize the upper-atmosphere state using electromagnetic waves.

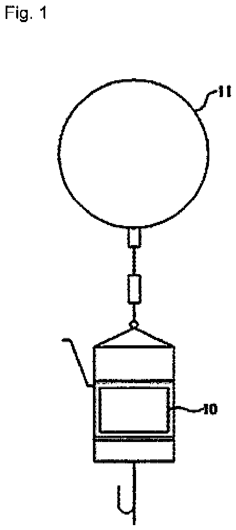

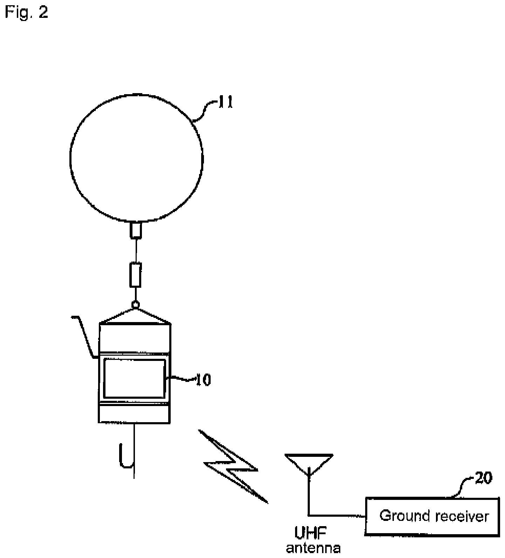

Figure 1 is a view illustrating a configuration of a typical radiosonde, and Figure 2 is a view illustrating a system configuration of a typical radiosonde and a ground receiver. As illustrated in Figures 1 and 2, the radiosonde 10 is tied to a balloon 11 and is able to fly into the stratosphere, thus observing a weather state on an atmospheric pressure, temperature, humidity, etc. in the upper-atmosphere and wirelessly transmitting the observed information to the ground receiver 20. The conventional ground receiver 20 is a single channel receiver and has an observation cycle of 2 hours, so it is able to observe an upper atmosphere at least 2-hour intervals. More specifically, when the radiosonde 10 is operated and checked on the spot, there is not any radio interference before the start of observation. If the radio interference occurs in the middle of observation, the observation stops. In this case, the observation is carried out again, thus causing a lot of financial loss. Moreover, if another radiosonde is flew before one radiosonde falls onto the ground and loses its function, it is impossible to shorten the time interval for flying the radiosonde into within 1 hour so as to avoid a problem wherein the radio of the first flew radiosonde is received as an observation information of the later few radiosonde.

### Disclosure of Invention

### Technical Problem

Accordingly, the present invention is made in an effort to resolve the problem encountered in a conventional method. It is an object of the present invention to provide a radiosonde receiver device for a multi-channel upper-atmosphere observation wherein a weather state of an upper atmosphere can be observed without any limitation to a radio interference from a plurality of radiosondes which are concurrently operated, in such a way that a multi-channel radiosonde receiver is formed of a 2-channel or 3-channel receiver of a SDR so as to correspond to a radiosonde which is configured to wirelessly transmit in a time division method.

It is another object of the present invention to provide a radiosonde receiver device for a multi-channel upper-atmosphere observation which is able to allow an accurate weather observation under a severe weather condition in such a way that an observation interruption due to a radio interference in the middle of an observation of an upper atmosphere can be prevented, and 3 radiosondes can be concurrently operated, and if the radiosonde observation is carried out at an interval of 30 minutes, a denser interval observation can be carried out with respect to a severe weather change, for example, typhoon, and the weather state can be more accurately analyzed.

It is further another object of the present invention to provide a radiosonde receiver device for a multi-channel upper-atmosphere observation which makes it possible to prevent any mussing value which may occur due to a radio interference even when a radio interference occurs in the middle of observation, in such a way that the monitoring can be concurrently carried out with respect to the multiple channels of a multi-channel radiosonde receiver.

### Technical Solution

To achieve the above objects, there is provided a radiosonde receiver device for a multi-channel upper-atmosphere, which may include, but is not limited to, a multi-channel radiosonde receiver which is configured to receive a meteorological data obtained by observing a weather state of a temperature, an atmospheric pressure and humidity of an upper atmosphere from a radiosonde which is configured to wirelessly transmit by a time division method and to digitally sample and output a meteorological frequency in full ranges (400.0MHz∼406MHz, BW=6MHz) on which the meteorological data is carried;

a personal computer (PC) which is configured to receive the digitally sampled digital signal from the multi-channel radiosonde receiver and recover the meteorological data through an analysis on the digital signal; and a USB & Ethernet interface which is configured to allow a signal transmission and receiving based on a communication protocol between the multi-channel radiosonde receiver and the personal computer.

Preferably, the radiosonde includes a time division type transmission wherein the number of use frequency channels is 2 or 3.

Preferably, the multi-channel radiosonde receiver is a SDR (Software Defined Radio) type receiver.

More preferably, the multi-channel radiosonde receiver is a 2-channel or 3-channel receiver corresponding to a configuration wherein two or three radiosondes are operated.

Preferably, the multi-channel radiosonde receiver may include, but is not limited to, an RF front end which is configured to amplify a weak signal inputted from a wireless signal input terminal which receives a meteorological data from the radiosonde; a frequency oscillation circuit (PLL) which is configured to oscillate a frequency to lower to a baseband; a mixer which is configured to down-convert and output the signal using a baseband of a band of 0∼6MHz in such a way to mix a frequency oscillation signal to oscillate a frequency to lower to a baseband with a wireless signal inputted from the RF front end; a low pass filter (LPF) which is configured to pass only the signals of 0∼6MHz among the signal outputted from the mixer; an analog to digital converter (ADC) which is configured to convert the analog signal which has passed through the low pass filter, into a digital signal; and a digital signal processor (DSP) which is configured to control the analog to digital converter and carry out a control to transmit the converted digital signal to the personal computer.

More preferably, the personal computer is configured to subject, to a fast Fourier transform (FFT), the digital signal received from the digital signal processor of the multi-channel radiosonde receiver and to recover the meteorological data signal of the final radiosonde through a demodulation.

Most preferably, the personal computer is configured to recover the data at a frequency that the demodulator has set, when a user sets a desirable frequency channel and is configured to independently recover the data at two set channels when two frequencies are selected and mixed and to recover and analyze the observation data by mixing the data outputted from the two channels.

Most preferably, the personal computer is configured to set, as an observation data, the data which is inputted from the remaining one channel when a radio interference occurs at one channel in the middle of a data analysis with respect to the two channels and to use the thusly set data.

### Advantageous Effects of the Invention

According to a radiosonde receiver device for a multi-channel upper-atmosphere observation of the present invention, it is possible to observe a weather state of an upper atmosphere without any limitation to a radio interference from a plurality of radiosondes which are concurrently operated, in such a way that a multi-channel radiosonde receiver is formed of a 2-channel or 3-channel receiver of a SDR method while corresponding to a radiosonde configured to wirelessly transmit a time division method.

Moreover, according to the present invention, an accurate weather observation is possible under a severe weather condition in such a way to prevent any observation interruption due to a radio interference in the middle of observation of an upper atmosphere, and 3 radiosondes can be concurrently operated, and if the radiosonde observation is carried out at an interval of 30 minutes, a denser interval observation with respect to a severe weather change, for example, typhoon, is available. Moreover, the atmosphere state can be more accurately analyzed.

Furthermore, in the present invention, since the monitoring with respect to multiple channels of a multi-channel radiosonde receiver is available, any missing values due to a radio interference can be prevented even when a radio interference occurs in the middle of observation.

### Brief Description of Drawings

Figure 1 is a view illustrating a configuration of a typical radiosonde.
Figure 2 is a view illustrating a system configuration of a typical radiosonde and a ground receiver.
Figure 3 is a view illustrating a system configuration of a radiosonde receiver device for a multi-channel upper-atmosphere observation according to an embodiment of the present invention.
Figure 4 is a view illustrating a configuration of an inner function block of a multi-channel radiosonde receiver which has been applied to a radiosonde receiver device for a multi-channel upper-atmosphere observation according to an embodiment of the present invention.

### Best Modes for carrying out the invention

The preferred embodiments of the present invention will be described to the extent that a person having ordinary skill in the art can easily implement the present invention with reference to the accompanying drawings. While the preferred embodiments of the present invention are being described, the detailed descriptions thereof will be omitted if it is judged that the detailed descriptions on the related known function or configuration may unnecessarily make the subjects of the present invention unclear, Moreover, throughout the specification, the same reference number will be assigned to the components having similar functions and operations.

Moreover, when describing "a predetermined portion is connected to another portion", it means throughout the specification a direct connection as well as an indirect connection with another component being disposed between them. When describing "a predetermined component comprises another component", unless otherwise stated herein the specification, it means "further including another component, not excluding such a component.

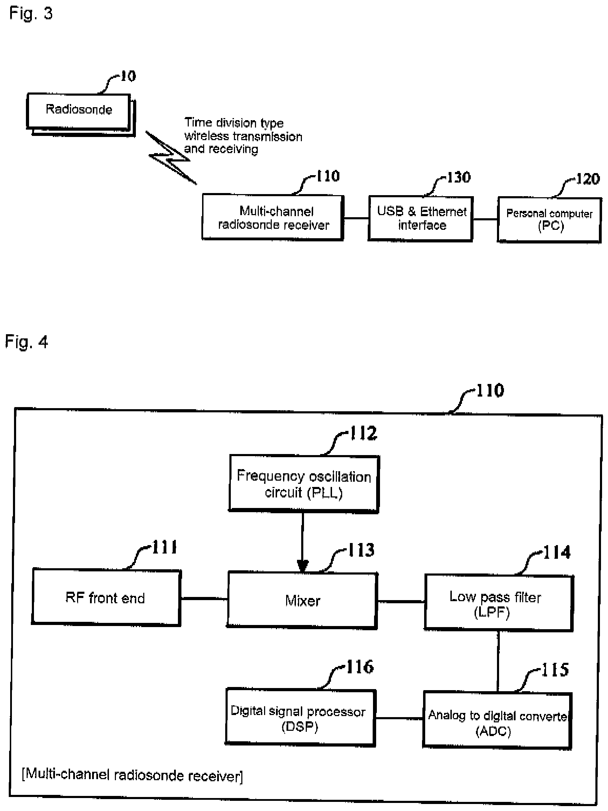

Figure 3 is a view illustrating a system configuration of a radiosonde receiver device for a multi-channel upper-atmosphere observation according to an embodiment of the present invention. Figure 4 is a view illustrating a configuration of an inner function block of a multi-channel radiosonde receiver which has been applied to a radiosonde receiver device for a multi-channel upper-atmosphere observation according to an embodiment of the present invention. As illustrated in Figure 3, the radiosonde receiver device for a multi-channel upper-atmosphere observation according to an embodiment of the present invention may include, but is not limited to, a multi-channel radiosonde receiver 110, a personal computer 120 and a USB & Ethernet interface 130.

The multi-channel radiosonde receiver 110 is configured to receive a weather data obtained by observing a weather state of a temperature, atmospheric pressure and humidity of an upper atmosphere from the radiosonde 10 configured to wirelessly transmit by a time division method, and to digitally sample and output a meteorological frequency in full ranges (400.0MHz∼406MHz, BW=6MHz) on which the meteorological date is carried. Here, the radiosonde 10 may use a time division type transmitter wherein the use frequency channel has been specified into 2 or 3. Two or three radiosondes can be concurrently operated, and the radiosondes 10 can observe at an interval of 30 minutes, and the multi-channel radiosonde receiver 110 may be formed of a 2-channel or 3-channel receiver based on the number of the radiosondes 10 which are operated together. In the present invention, the number of the channels used for the transmission and receiving operations by the time division method may be limited to three channels to the maximum, by which any complexity in terms of the implementation of the invention can be resolved.

Moreover, the multi-channel radiosonde receiver 110 may be formed of a SDR (Software Defined Radio) type receiver which is able to concurrently monitor 2 or 3 channels. As illustrated in Figure 4, the multi-channel radiosonde receiver 110 may include, but is not limited to, an RF front end 111 which is configured to amplify a weak signal inputted from a wireless signal input terminal which receives a meteorological data from the radiosonde 10, a frequency oscillation circuit (PLL) 112 which is configured to oscillate a frequency to lower to a baseband, a mixer 113 which is configured to down-convert and output the signal using a baseband of a band of 0∼6MHz in such a way to mix a frequency oscillation signal to oscillate a frequency to lower to a baseband with a wireless signal inputted from the RF front end 111, a low pass filter (LPF) 114 which is configured to pass only the signals of 0∼6MHz among the signal outputted from the mixer 113, an analog to digital converter (ADC) 115 which is configured to convert the analog signal which has passed through the low pass filter 114, into a digital signal, and a digital signal processor (DSP) 116 which is configured to control the analog to digital converter 115 and carry out a control to transmit the converted digital signal to the personal computer 120.

The personal computer 120 is a device which is configured to receive a digitally sampled digital signal from the multi-channel radiosonde receiver 110 and to recover a meteorological data through an analysis process with respect to the digital signal. This personal computer 120 may subject a digital signal to a Fast Fourier Transform (FFT) wherein the digital signal is received from the digital signal processing 116 of the multi-channel radiosonde receiver 110, and may recover a meteorological data signal of the final radiosonde 10 through a demodulation. Namely, if a user sets a desirable frequency channel, the personal computer 120 is able to recover all the data at a frequency set by a demodulator. If a mixing is carried out by selecting two frequencies, the data are independently recovered from two set channels, and then the observation data are recovered and analyzed in such a way to mix the data outputted from two channels. If a radio interference occurs at one channel in the middle of a data analysis with respect to two channels, the personal computer 120 may set as an observation data the data which are inputgted from the remaining one channel and may use the set data.

The USB and Ethernet interface 130 may be an interface configuration which is able to transmit or receive signals based on a communication protocol between the multi-channel radiosonde receiver 110 and the personal computer 120.

The present invention described so far may be modified or applied into various forms by a person having ordinary skill in the art, and the scope of the technical concept of the present invention should be determined based on the following claims.

### Legend of Reference Numbers

110: Multi-channel radiosonde receiver
111: RF front end
112: Frequency oscillation circuit (PLL) 113: Mixer
114: Low-pass Filter (LPF) 115: Analog to digital converter (ADC)
116: Digital signal processor (DSP) 120: Personal computer (PC)
130: USB & Ethernet interface

## Claims

1. A radiosonde receiver device for a multi-channel upper-atmosphere, comprising:
a multi-channel radiosonde receiver 110 which is configured to receive a meteorological data obtained by observing a weather state of a temperature, an atmospheric pressure and humidity of an upper atmosphere from a radiosonde 10 which is configured to wirelessly transmit by a time division method and to digitally sample and output a meteorological frequency in full ranges (400.0MHz∼406MHz, BW=6MHz) on which the meteorological data is carried;
a personal computer (PC) 120 which is configured to receive the digitally sampled digital signal from the multi-channel radiosonde receiver 110 and recover the meteorological data through an analysis on the digital signal; and
a USB & Ethernet interface 130 which is configured to allow a signal transmission and receiving based on a communication protocol between the multi-channel radiosonde receiver 110 and the personal computer 120.

2. The device of claim 1, wherein the radiosonde 10 includes a time division type transmission wherein the number of use frequency channels is 2 or 3.

3. The device of claim 1, wherein the multi-channel radiosonde receiver 110 is a SDR (Software Defined Radio) type receiver.

4. The device of claim 3, wherein the multi-channel radiosonde receiver 110 is a 2-channel or 3-channel receiver corresponding to a configuration wherein two or three radiosondes 10 are operated.

5. The device of any of claims 1 to 4, wherein the multi-channel radiosonde receiver 110 comprises:
an RF front end 111 which is configured to amplify a weak signal inputted from a wireless signal input terminal which receives a meteorological data from the radiosonde 10;
a frequency oscillation circuit (PLL) 112 which is configured to oscillate a frequency to lower to a baseband;
a mixer 113 which is configured to down-convert and output the signal using a baseband of a band of 0∼6MHz in such a way to mix a frequency oscillation signal to oscillate a frequency to lower to a baseband with a wireless signal inputted from the RF front end 111;
a low pass filter (LPF) 114 which is configured to pass only the signals of 0∼6MHz among the signal outputted from the mixer 113;
an analog to digital converter (ADC) 115 which is configured to convert the analog signal which has passed through the low pass filter 114, into a digital signal; and
a digital signal processor (DSP) 116 which is configured to control the analog to digital converter 115 and carry out a control to transmit the converted digital signal to the personal computer 120.

6. The device of claim 5, wherein the personal computer 120 is configured to subject, to a fast Fourier transform (FFT), the digital signal received from the digital signal processor 116 of the multi-channel radiosonde receiver 110 and to recover the meteorological data signal of the final radiosonde 10 through a demodulation.

7. The device of claim 6, wherein the personal computer 120 is configured to recover the data at a frequency that the demodulator has set, when a user sets a desirable frequency channel and is configured to independently recover the data at two set channels when two frequencies are selected and mixed and to recover and analyze the observation data by mixing the data outputted from the two channels.

8. The device of claim 7, wherein the personal computer 120 is configured to set, as an observation data, the data which is inputted from the remaining one channel when a radio interference occurs at one channel in the middle of a data analysis with respect to the two channels and to use the thusly set data.
